(19) **Europäisches Patentamt / European Patent Office / Office européen des brevets**

(11) **EP 1 905 505 B1**

(12) **EUROPEAN PATENT SPECIFICATION**

(45) Date of publication and mention
of the grant of the patent:
**13.07.2011 Bulletin 2011/28**

(51) Int Cl.:
*B01F 3/08* (2006.01)　　*B01F 5/02* (2006.01)
*B01F 13/00* (2006.01)　　*B01F 15/00* (2006.01)
*B01J 19/00* (2006.01)

(21) Application number: **07018916.2**

(22) Date of filing: **26.09.2007**

(54) **Methods of manufacturing emulsions**

Verfahren zur Herstellung von Emulsionen

Procédés pour la fabrication des émulsions

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.09.2006 JP 2006269525**

(43) Date of publication of application:
**02.04.2008 Bulletin 2008/14**

(73) Proprietor: **FUJIFILM Corporation**
**Minato-ku**
**Tokyo 106-8620 (JP)**

(72) Inventors:
• **Ueyama, Tomohide**
**Ashigara-kami-gun**
**Kanagawa 258-0022 (JP)**
• **Nagasawa, Hideharu**
**Ashigara-kami-gun**
**Kanagawa 258-0022 (JP)**

(74) Representative: **HOFFMANN EITLE**
**Patent- und Rechtsanwälte**
**Arabellastraße 4**
**81925 München (DE)**

(56) References cited:
EP-A- 1 839 733　　EP-A- 1 882 516
EP-A- 1 905 802　　JP-A- 2005 288 254
US-A- 5 876 702　　US-A1- 2004 121 454

• NAGASAWA H ET AL: "DESIGN OF A NEW MICROMIXER FOR INSTANT MIXING BASED ON THE COLLISION OF MICRO SEGMENTS" CHEMICAL ENGINEERING AND TECHNOLOGY, WEINHEIM, DE, vol. 28, 2005, pages 324-331, XP001248809 ISSN: 0930-7516
• ENGLER M ET AL: "Effective Mixing by the Use of Convective Micro Mixers" AICHE SPRING MEETING. NATURAL GAS UTILIZATION CONFERENCE, X, US, 2005, page 18pp, XP009098280
• PANIC S ET AL: "Experimental approaches to a better understanding of mixing performance of microfluidic devices" CHEMICAL ENGINEERING JOURNAL, ELSEVIER SEQUOIA, LAUSANNE, CH, vol. 101, no. 1-3, 2004, pages 409-419, XP009098296 ISSN: 1385-8947

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to methods of manufacturing an emulsion that is widely used in industrial usages such as foods, make up materials, or pharmaceuticals.

Description of the Related Art

Conventional methods of manufacturing an emulsion that is used for foods, make up materials, pharmaceuticals, or the like are broadly divided into mechanical emulsification methods of achieving dispersion by applying high shearing stress, and chemical emulsification methods without applying such high shearing stress.

The mechanical emulsification methods include batch emulsification methods of achieving dispersion by applying high shearing stress for a long time by using a homomixer, an ultramixer or the like; and flow emulsification methods of achieving dispersion by applying high shearing stress with continuously feeding materials by using a high pressure homogenizer, a micromixer, or the like.

For example, National Publication of International Patent Application No. 2002-538947 (corresponding to WO 00/54735 (A1)) suggests a method of preparing composition for make up materials or pharmaceuticals by using a micromixer. The Patent Document states that use of the method can achieve uniform distribution of shearing stress, temperature and introduced energy, which is not achieved in a conventional batch stirring vessel, whereby a mixed product in which particle sizes or droplet sizes distribute uniformly.

Japanese Patent Application Laid-Open No. 2003-321325 suggests a method of industrially manufacturing products for making up hair or skin including a step of mixing a composition by using a micromixer and a step of conducting induction by using a micro heat exchanger. The Patent Document states that use of the method can provide products having impressive appearance by dispersing molecules to be uniformed to have proper sizes, whereby providing good skin mildness, good making up effect and good effect of auxiliaries, good inhibition on crystallization, and good rheology properties. The Patent Document also states that use of the method can reduce the amount of an emulsion to be required.

However, it is difficult to prepare an emulsion excellently monodispersed with a fine size equal to or less than 1 $\mu$m by using such mechanical emulsification methods.

In addition, obtained emulsions have low stability with time. In particular, when an emulsion has a high concentration, large amounts of a surfactant have to be added thereto for the purpose of increasing stability with time. In addition, a high pressure homogenizer has a problem of not being operated with stability because of considerably large mechanical load.

On the other hand, chemical emulsification methods include a phase inversion emulsification method, a D-phase emulsification method, a gel emulsification method, a liquid crystal emulsification method, a solubilization method (a coagulation method), a phase inversion temperature emulsification method (an HLB temperature emulsification method), and the like. Among the methods, the solubilization method and the phase inversion temperature emulsification method are practically used as methods that can prepare emulsions having a fine size of equal to or less than 1 $\mu$m even by applying low shearing stress.

For example, as to a method of manufacturing a stable micro emulsion with defining inorganicity of oil and a ratio of quantity between a nonionic surfactant and the oil, there is proposed to adopt a solubilization method in which the temperature of a system is increased once at a temperature equal to or greater than a solubilization limiting temperature and then cooled (JP6061454 (B)).

Furthermore, as to a method of manufacturing an oil-in-water emulsion, there is proposed to use the phase inversion temperature emulsification method and further to define the chemical structure of a nonionic surfactant and additional amounts of the nonionic surfactant and an oil agent (Japanese Patent Application Laid-Open No. 9-308822).

In order to obtain emulsions having excellent stability with time by the solubilization method and the phase inversion temperature emulsification method, what are important are a step of mixing and emulsifying a nonionic surfactant, an oil agent and water as materials and temperature control of an emulsion immediately after the step. That is, immediately after a nonionic surfactant, an oil agent and water are mixed and emulsified, this emulsion is required to be rapidly cooled or rapidly heated to a temperature at which the emulsion is stabilized.

However, use of the above conventional solubilization method and the phase inversion temperature emulsification method require a long time to cool or heat an emulsion prepared under heat to a temperature at which the emulsion is stabilized. Therefore, there is a problem that Ostwald ripening or coalescence of particles of a prepared emulsion proceeds before the emulsion is stabilized, thereby causing polydispersity of the emulsion.

In addition, National Publication of International Patent Application No. 2002-538947 and Japanese Patent Application Laid-Open No. 2003-321325 do not disclose specific emulsification methods conducted in micromixers. In particular, the micro heat exchanger in Japanese Patent Application Laid-Open No. 2003-321325 is just used to cool a heated composition before the composition is packed in a product vessel. The micro heat exchanger is not used to conduct specific temperature control designed for an emulsification method.

Furthermore, Japanese Examined Application Publication No. 6-61454 and Japanese Patent Application Laid-Open No. 9-308822 just disclose a nonionic surfactant and composition of a material solution containing the nonionic surfactant which are designed for the purpose of obtaining stable emulsions. Japanese Examined Application Publication No. 6-61454 and Japanese Patent Application Laid-Open No. 9-308822 do not disclose a temperature control method for conducting the solubilization method or the phase inversion temperature emulsification method.

Therefore, when the solubilization method or the phase inversion temperature emulsification method is conducted, temperature control is not conducted for the purpose of suppressing the Ostwald ripening or coalescence of particles of an emulsion. As a result, an emulsion that has a fine particle size and high monodispersity cannot be obtained.

The present invention has been accomplished in view of the present situation. An object of the present invention is to provide a method of manufacturing an emulsion that has a fine particle size and high monodispersity, and the emulsion.

## SUMMARY OF THE INVENTION

In order to achieve the object, a first aspect of the present invention provides a method of manufacturing an emulsion by using a nonionic surfactant, an oil agent and water, wherein the following steps are conducted in a continuous flow system: an emulsification step of forming an emulsion by emulsifying the nonionic surfactant, the oil agent and the water at a phase inversion temperature at which three phases of the nonionic surfactant, the oil agent and the water coexist; and an emulsion stabilization step of passing the emulsion in a microchannel with an equivalent diameter equal to or less than 1 mm to rapidly cool or rapidly heat the emulsion from the phase inversion temperature to a temperature at which the emulsion is stabilized.

In order to achieve the object, a second aspect of the present invention provides a method of manufacturing an emulsion by using a nonionic surfactant, an oil agent and water, wherein the following steps are conducted in a continuous flow system: an emulsification step of forming an emulsion by emulsifying the nonionic surfactant, the oil agent and the water at a solubilization temperature at which the nonionic surfactant, the oil agent and the water are solubilized to form a single phase, the solubilization temperature being not less than a solubilization limiting temperature and not greater than a clouding point; and an emulsion stabilization step of passing the emulsion in a microchannel with an equivalent diameter equal to or less than 1 mm to rapidly cool or rapidly heat the emulsion from the solubilization temperature to a temperature at which the emulsion is stabilized.

According to the first or second aspect, emulsion particles with fine sizes can be formed in the emulsification step, and the emulsion can be rapidly cooled or rapidly heated instantaneously to a temperature at which the emulsion is stabilized by using a microchannel. As a result, coalescence of the emulsion particles is suppressed, whereby an emulsion that has a fine particle size and high monodispersity can be obtained. Furthermore, by using a microchannel for the rapid cooling or the rapid heating, the difference between a temperature at which an emulsion is stabilized and a temperature of a heat source for heat exchanging can be decreased, thereby contributing to energy conservation. It should be noted that the temperature at which an emulsion is stabilized denotes a temperature at which coalescence of emulsion particles can be suppressed.

In a third aspect according to the first or the second aspect, a temperature difference in a radial direction of the microchannel between a radial central portion and an inside wall surface of the microchannel is equal to or less than 1 °C.

According to the third aspect, temperature distribution on rapidly cooling or rapidly heating an emulsion is extremely small, thereby suppressing proceeding of the Ostwald ripening or coalescence of particles of the emulsion.

In a fourth aspect according to any one of the first to the third aspects, a temperature of the emulsion is changed at a rate equal to or greater than 100°C/second in the emulsion stabilization step.

According to the fourth aspect, a temperature of the emulsion is changed rapidly, whereby the emulsion can be stabilized with a state of good monodispersity before proceeding of the Ostwald ripening or coalescence of particles of the emulsion proceeds.

In a fifth aspect according to any one of the first to the fourth aspects, retention time of the emulsion after the emulsification step is complete to provide the emulsion and before the emulsion is subjected to the emulsion stabilization step is equal to or less than 1 second.

According to the fifth aspect, proceeding of the Ostwald ripening or coalescence of particles of the emulsion can be suppressed after the emulsification step is complete to provide the emulsion and before the emulsion is subjected to the emulsion stabilization step.

In a sixth aspect according to any one of the first to the fifth aspects, the emulsification step is conducted by mixing the nonionic surfactant, the oil agent and the water in a mixing channel with an equivalent diameter equal to or less than 1 mm.

According to the sixth aspect, mixing on the emulsification is conducted at a level of micrometers, thereby obtaining an emulsion that has a fine particle size and high monodispersity.

An emulsion manufactured by applying the methods of manufacturing an emulsion according to any one of the first to sixth aspects is also provided.

The emulsion has a volume average particle size equal to or less than 10 $\mu$m, and a particle size distribution (Mv/Mn) equal to or less than 1.5.

The volume average particle size of an emulsion is preferably equal to or less than 1.0 $\mu$m and more preferably equal to or less than 0.1 $\mu$m. The particle size distribution (Mv/Mn) of an emulsion is preferably equal to or less than 1.4, and more preferably equal to or less than 1.3.

According to the present invention, an emulsion that has a fine particle size and high monodispersity can be manufactured. Furthermore, by using a microchannel for the rapid cooling or the rapid heating, the difference between a temperature at which an emulsion is stabilized and a temperature of a heat source for heat exchanging can be decreased, thereby contributing to energy conservation.

BRIEF DESCRIPTION OF THE DRAWINGS

Fig. 1 is a phase diagram in a solubilization method;
Fig. 2 is a phase diagram in a phase inversion temperature emulsification method;
Fig. 3 is an explanatory view explaining an example of equipment for manufacturing an emulsion according to the present invention;
Fig. 4 is an exploded perspective view of a schematic configuration of a micromixer to which the present invention is applied;
Fig. 5 is a partial perspective view of a part of a micromixer according to another embodiment; and
Fig. 6 is a sectional view explaining a micro heat exchanger to which the present invention is applied.

DETAILED DESCRIPTION OF THE PREFERRED EMBODIMENTS

Hereinafter, preferred embodiments of a method of manufacturing an emulsion according to the present invention are described with reference to the attached drawings.

First, principles of the emulsification methods according to the present invention (a solubilization method and a phase inversion temperature emulsification method) are described. In the emulsification methods according to the present invention, a nonionic surfactant, an oil agent and water (hereafter, these are referred to as a material solution) are emulsified in a solubilized state or a phase inversion state, and then temperature of the solution is changed rapidly to a stabilization temperature, thereby forming an emulsion that has a fine particle size and high monodispersity.

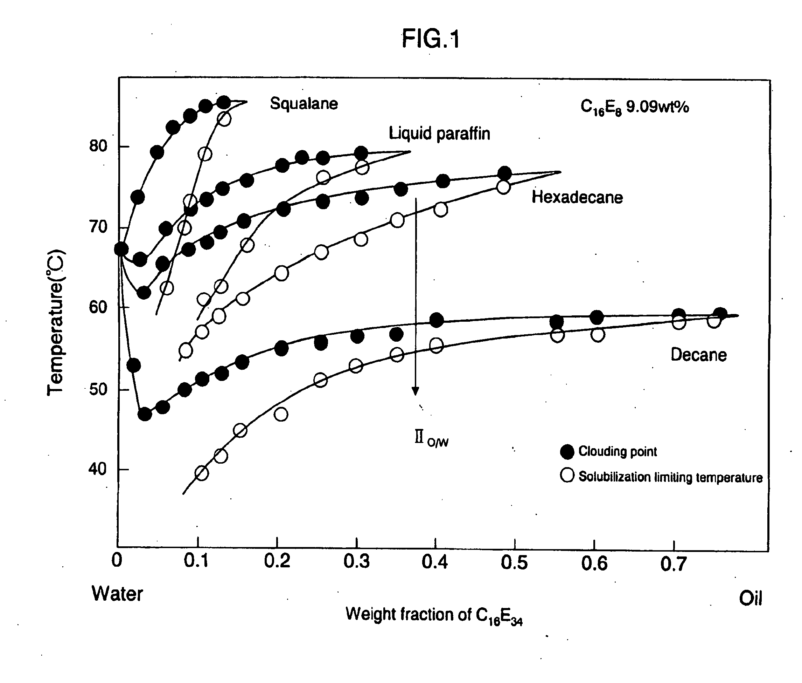

Fig. 1 is a phase diagram of water/a nonionic surfactant/various oil agents in a solubilization method (see Non-Patent Document: T. Tomomasa, M. Kawachi, H. Nakajima "Oil Chemistry", 37, 1012 (1988); and "Technology, Evaluation and It's Application of Functional Emulsion", p.8 issued by CMC Publishing CO., LTD.)

As shown in Fig. 1, in the solubilization method, amounts of oil agents soluble in a water phase of the material solution sharply increases in the region between the clouding point and the solubilization limiting temperature, thereby forming a single phase micro emulsion. This single phase micro emulsion is stirred and emulsified to form an emulsion that has an ultrafine particle size and high monodispersity. Then as shown by the arrow in Fig. 1, when the emulsion is rapidly cooled to the two phase region, an oil-in-water emulsion stable with time is formed. On the other hand, when the emulsion is rapidly heated to a temperature higher than the clouding point, a water-in-oil emulsion is formed. Herein, the clouding point is a temperature at which an emulsion starts to separate into two phases, a water phase and an oil phase. The solubilization limiting temperature is a limiting temperature that water and oil can form a continuous phase. The region at the limiting temperature or below is a two phase region where oil that is not soluble in water any longer separates from water, and turbidity increases. In addition, in the present embodiments, the region between the clouding point and the solubilization limiting temperature (not less than the solubilization limiting temperature and not greater than the clouding point) is referred to as a solubilization temperature hereinafter.

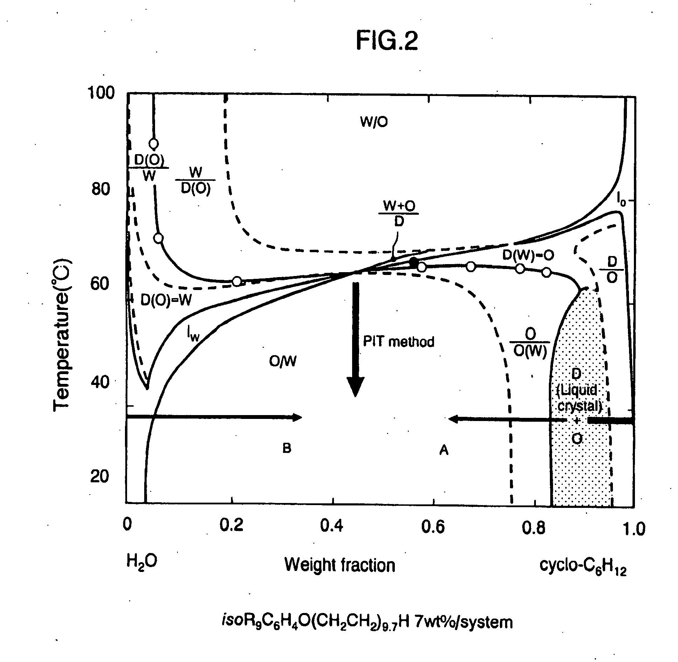

Fig. 2 is a phase diagram of water/a nonionic surfactant/cyclohexane in a phase inversion temperature emulsification method (see Non-Patent Document: H. Saito, K. Shinoda, "Oil Chemistry", 17, 133 (1968); and "Development of Emulsification Technology & Emulsifying Agent", p.130 issued by CMC Publishing CO., LTD.)

As shown in Fig. 2, in the phase inversion temperature emulsification method, the material solution forms a state in which three phases of the nonionic surfactant, the oil agent and the water coexist in the phase inversion temperature region (about 60 to 70°C). By stirring and emulsifying the material solution in the three phase coexistent state, an emulsion that has an ultrafine particle size and excellent monodispersity can be formed. Then as shown by the arrow in Fig. 2, when the emulsion is rapidly cooled to the two phase region, an oil-in-water emulsion stable with time is formed. On the other hand, when the emulsion is rapidly heated to a temperature higher than the phase inversion temperature region, a water-in-oil emulsion is formed.

As mentioned above, highly precise temperature controls are important in a step of emulsifying the material solution by heating to a solubilization temperature in the solubilization method or a phase inversion temperature in the phase inversion temperature emulsification method and mixing (an emulsification step), and after the emulsification step, in a step of rapidly shifting the emulsion to a stable two phase region (an emulsion stabilization step of rapidly cooling or rapidly heating an emulsion to a temperature at which the emulsion is stabilized). Herein, the temperature at which an emulsion is stabilized (stabilization temperature) denotes a temperature at which Ostwald ripening or coalescence of particles of the emulsion can be suppressed, and for example, is lower than the solubilization temperature or the phase inversion temperature by 20 to 40°C or more.

The stability with time of an emulsion has deep relationships with monodispersity of the emulsion. An effect of a monodispersed emulsion on stabilization can be explained by Ostwald ripening based on Thompson-Freundlich formula.

[Formula 1]

$$RT \ln \frac{Ca}{Cpoio} = \frac{2\gamma M}{a\rho}$$

(Ca: solubility in an interface with a curvature a, Cpoio: solubility in a horizontal interface, y: interfacial tension, M: molecular weight of a dispersed phase, and p: density of a dispersed phase)

That is, solubility of dispersed phase particles (emulsion particles) in the vicinity of an interface in a continuous phase depends on the curvature of the interface of the dispersed phase particles. Therefore, the smaller the sizes of the dispersed phase particles are, the larger its solubility in the continuous phase becomes. The larger the sizes of the dispersed phase particles are, the smaller its solubility in the continuous phase becomes.

In the case of polydispersed emulsions, concentration differences occur between surfaces of particles having different particle sizes. Therefore, materials of the dispersed phase tend to move to the continuous phase. As a result, small dispersed phase particles further become smaller, and large dispersed phase particles further become larger. Conversely, a monodispersed emulsion has a small concentration difference between surfaces of particles, and the move of materials described above becomes negligible, thereby being less prone to break and becoming stable (see Non-Patent Document: "New Techniques for Highly Stabilizing Emulsion", p.25 issued by TECHNICAL INFORMATION INSTITUTE CO., LTD.) Therefore, the higher monodispersity an emulsion has, the more excellent stability with time the emulsion exhibits.

Therefore, in the present invention, temperature controls in the emulsion stabilization step are conducted by using a micro device. In addition, mixing controls in the emulsification step are also preferably conducted by using a micro device.

Retention time during a shift from the emulsification step to the emulsion stabilization step is set to be as short as possible. The retention time is preferably equal to or less than 1 second, more preferably equal to or less than 0.1 second, and still more preferably equal to or less than 0.01 second.

The gradient of temperature change can be adjusted with the type of a heating medium, temperature, the equivalent diameter or the length of a microchannel, or the like. The gradient of temperature change is preferably adjusted to be equal to or greater than 100°C/second, and more preferably equal to or greater than 400°C/second.

A microchannel preferably has an equivalent diameter equal to or less than 1 mm, more preferably equal to or less than 500 $\mu$m, and still more preferably equal to or less than 100 $\mu$m. For the purpose of conducting temperature control in a microchannel more precisely, an equivalent diameter of a microchannel is preferably determined so that temperature distribution between a radial center and a wall surface of a microchannel is equal to or less than $\pm$1°C, and more preferably equal to or less than $\pm$0.1°C.

An emulsion prepared according to the present invention preferably has a volume average particle size (Mv) equal to or less than 10 $\mu$m, more preferably equal to or less than 1 $\mu$m, and still more preferably equal to or less than 0.1 $\mu$m. The emulsion preferably has a particle size distribution (Mv/Mn) equal to or less than 1.4, and more preferably equal to or less than 1.3.

Next, various materials for implementing the emulsification methods are described.

The nonionic surfactant is required to be hydrophilic for obtaining W/O emulsions. Examples of the nonionic surfactant may include: POE sorbitan fatty esters such as POE sorbitan monooleate, POE sorbitan monostearate, or POE sorbitan trioleate; POE sorbitol fatty esters such as POE sorbitol monooleate, POE sorbitol pentaoleate, or POE sorbitol monostearate; POE glycerol fatty esters such as POE glycerol monostearate, POE glycerol monoisostearate, or POE glycerol triisostearate; POE fatty esters such as POE monooleate, POE distearate, or POE dioleate; POE alkylethers such as POE oleyl ether, POE stearyl ether, POE behenyl ether, POE 2-octyldodecyl ether, POE 2-hexyldecyl ether, POE 2-heptylundecyl ether, POE 2-decyltetradecyl ether, POE 2-decylpentadecyl ether, or POE cholestanol ether; POE alkylphenyl ethers such as POE nonylphenyl ether; POE·POP block copolymers; POE·POP alkylethers such as POE·POP cetyl ether, POE·POP 2-decyltetradecyl ether, or POE·POP hydrogenated lanolin; POE castor oil or hardened castor oil derivatives such as a POE castor oil; POE beeswax/lanolin derivatives such as POE sorbitol beeswax; sugar esters such as sucrose monooleate, and polyglycerol monoalkyl esters and polyglycerol monoalkyl ethers. These hydrophilic nonionic surfactants may be used alone or in combination of two or more of them.

Examples of the oil may include: hydrocarbon such as liquid paraffin, squalene, squalane, paraffin or vaseline; ethers such as ethylene glycol dioctyl ether; monoesters such as cetyl octanoate, octyldodecyl myristate, isopropyl palmitate, butyl stearate, myristyl myristate, decyl oleate, or oleyl oleate; higher alcohols such as isostearyl alcohol, octyldodecanol, oleyl alcohol, or lanolin alcohol; higher fatty acids such as eicosanoic acid; diesters such as di-2-ethylhexyl sebacate, or di-2-ethylhexyl adipate; glyceryl monoethers such as glycerol monooleyl ether; acid amides such as lauroyl lauryl amine; and natural animal or vegetable oils. These oils may be used alone or in combination of two or more of them.

The oil agent is determined depending on types or usages of target products. Examples of the oil agent may include: liquid paraffin, paraffin wax, vaseline, squalene, squalane, lanolin, higher alcohols, higher alcohol-fatty ester, fatty ester, monoglyceride fatty acid, diglyceride, triglyceride, natural animal or vegetable oils, silicone oils and the like. These oil agents may be solid, semisolid, or liquid. These oil agents may be used alone or in combination of two or more of them as necessary.

Besides the nonionic surfactant, the oil agent and the water, various components can be added. Furthermore, if necessary, aromatics, colorants, other powders, preservatives, medicaments, viscosity bodying agents, ultraviolet absorbing agents, chelating agents, other oils, surfactants, active auxiliaries or the like may be added to products to which the method of manufacturing an emulsion according to the present invention is applied.

The "micro device" in the present invention denotes a generic name of devices for passing fluids through microchannels, and/or combining fluids in the microchannels, thereby conducting processes such as mixing, reactions, or heat exchange. In particular, a micro device whose principal purpose is mixing is called a micromixer, a micro device whose principal purpose is conducting a reaction is called a micro reactor, and a micro device whose principal purpose is heat exchange is called a micro heat exchanger. The microchannel or a stream passing through the microchannel has a diameter or an equivalent diameter (in the case that the section of the channel or the stream is not circular) equal to or less than 1 mm. In particular, the diameter or the equivalent diameter is typically equal to or less than 500 $\mu$m, and preferably equal to or less than 100 $\mu$m.

The term equivalent diameter in the present invention is also called equilibrium diameter, and used in the mechanical engineering field. When a piping (a channel in the present invention) with an arbitrary sectional form is represented by its equivalent circular pipe, the diameter of the equivalent circular pipe is referred to as an equivalent diameter and defined as deq = 4A/p where A represents the sectional area of the piping and P represents the wetted perimeter length (peripheral length) of the piping. When the formula is applied to a circular pipe, the equivalent diameter is equal to the diameter of the circular pipe. The equivalent diameter is used to estimate flow or heat transfer properties of a piping based on data of its equivalent circular pipe. The equivalent diameter represents spatial scale (representative length) of phenomenon.

Hereinafter, preferred device configurations for conducting the emulsification methods are described. It should be noted that the present embodiments disclose an example of forming a stable oil-in-water emulsion by emulsifying a material solution at a phase inversion temperature and rapidly cooling the solution.

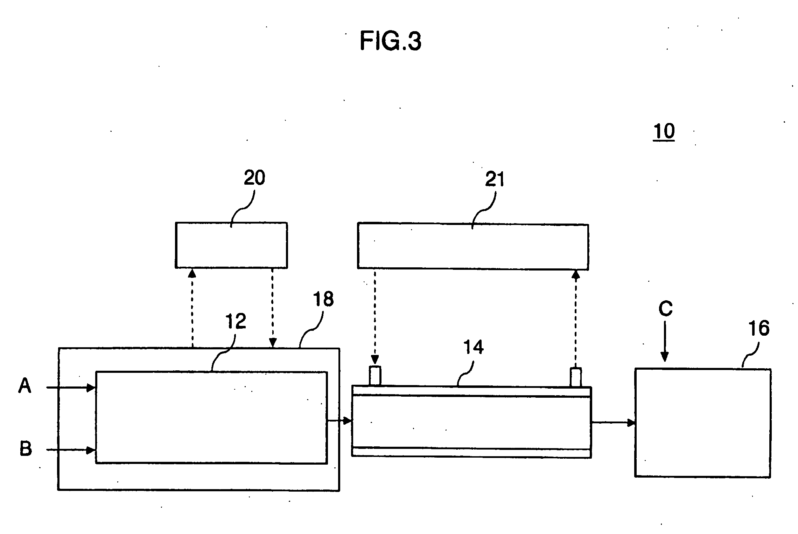

Fig. 3 is an explanatory view explaining an example of equipment for manufacturing an emulsion according to the present invention. As shown in Fig. 3, equipment 10 for manufacturing an emulsion is mainly composed of a micromixer 12 (an emulsification part) for mixing and emulsifying a solution A containing a nonionic surfactant and an oil agent, and a solution B containing water under heat; a micro heat exchanger 14 (an emulsion stabilization part) for rapidly cooling the mixed and emulsified emulsion; a storage part 16 for preparing and storing the rapidly cooled solution by using the micro heat exchanger by adding a solution C for preparation thereto; a temperature control part 20 for controlling temperature of a thermostatic chamber 18 accommodating the micromixer 12; and a temperature control part 21 for controlling temperature of a refrigerant supplied to the micro heat exchanger 14.

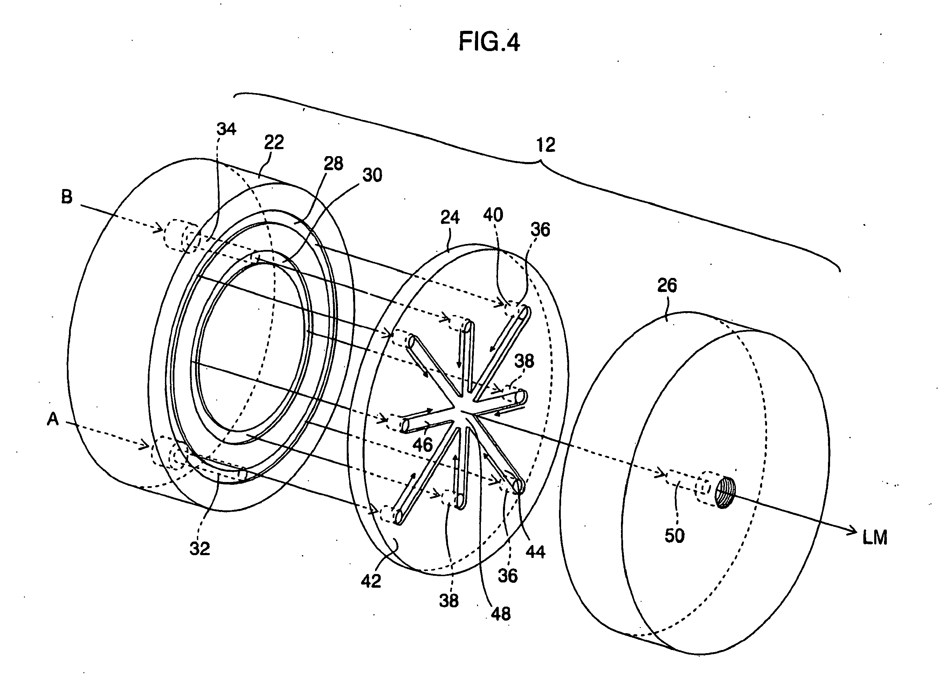

Fig. 4 is an exploded perspective view of a schematic configuration of a micromixer 12 for practicing the present invention.

The micromixer 12 is composed of a feed component 22, a combining component 24, and an ejection component 26 each having a cylindrical shape. In the case of forming the micromixer 12, these components are assembled by being integrally fastened to form a cylindrical single piece. This assembly is conducted, for example, by providing bores (or holes, not shown) passing through the cylinder in the peripheral portions of the components at the same spacing, and the components are integrally fastened to form a single piece via bolts/nuts.

A surface of the feed component 22 facing the combining component 24 has ring-shaped channels 28 and 30 formed concentrically. Each of the channels has a rectangle section. In the illustrated embodiment, bores 32 and 34 are formed to penetrate the feed component 22 in its thickness direction (or height direction) to reach the ring-shaped channels respectively.

The combining component 24 has bores 36 penetrating in the thickness direction. As for the bores 36, in the case of coupling the components to form the micromixer 12, the edge 40 of the bores 36, the edge being located on a surface of the combining component facing the feed component, opens to the ring-shaped channel 28. In the illustrated embodiment, four bores 36 are formed, and these bores are arranged at the same spacing in the peripheral direction of the ring-shaped channel 28.

The combining component 24 has bores 38 penetrating the component like the bores 36. As with the bores 36, the bores 38 is also formed to open to the ring-shaped channel 30. In the illustrated embodiment, the bores 38 are also arranged at the same spacing in the peripheral direction of the ring-shaped channel 30. The bores 36 and 38 are arranged alternately.

A surface 42 of the combining component 24 facing the ejection component 26 has microchannels 44 and 46. One end of the microchannel 44 or 46 is an opening of the bore 36 or 38, and the other end is the center 48 of the surface 42. Every microchannel extends from a bore toward the center 48 and merges into the center. The section of a microchannel may be, for example, a rectangle.

The ejection component 26 has a bore 50 (a mixing channel) penetrating the center of the component in its thickness direction. Therefore, one end of this bore opens to the center 48 of the combining component 24, and the other end opens to outside of the micromixer.

As is readily understood, the ring-shaped channels 28 and 30 correspond to feed channels of the micromixer of the present invention, fluids A and B fed at the ends of the bores 32 and 34 from outside of the micromixer flow to the ring-shaped channels 28 and 30 via the bores 32 and 34 respectively.

The ring-shaped channel 28 communicates with the bores 36. The fluid A flowing to the ring-shaped channel 28 enters the microchannel 44 via the bores 36. The ring-shaped channel 30 communicates with the bores 38. The fluid B flowing to the ring-shaped channel 30 enters the microchannel 46 via the bores 38. As is evident, the fluids A and B are separated into four in the combining region, flowing to the microchannels 44 and 46 respectively and then flowing toward the center 48.

As is readily understood, the bore 36 or 38 and the microchannel 44 or 46 correspond to a subchannel of a micromixer of the present invention. The center 48 of the combining component corresponds to a combining region. The central axis of the microchannel 44 and the central axis of the microchannel 46 intersect at the center 48. The combined fluids are ejected via the bore 50 outside of the micromixer as a stream LM. Therefore, the bore 50 corresponds to an ejection channel of the micromixer.

An example of preferred specifications of the micromixer in Fig. 4 is as follows:

Sectional form, width, depth, and diameter of the ring-shaped channel 28: a rectangle section, 1.5 mm, 1.5 mm, and 25 mm
Sectional form, width, depth, and diameter of the ring-shaped channel 30: a rectangle section, 1.5 mm, 1.5 mm, and 20 mm
Diameter, and length of the bore 32: 1.5 mm and 10 mm (circular section)
Diameter, and length of the bore 34: 1.5 mm and 10 mm (circular section)
Diameter, and length of the bore 36: 0.5 mm and 4 mm (circular section)
Diameter, and length of the bore 38: 0.5 mm and 4 mm (circular section)
Sectional form, width, depth, and length of the microchannel 44: a rectangle section, 100 $\mu$m, 60 $\mu$m, and 12.5 mm
Sectional form, width, depth, and length of the microchannel 46: a rectangle section, 100 $\mu$m, 60 $\mu$m, and 10 mm
Diameter, and length of the bore 50: 500 $\mu$m and 10 mm (circular section)

It should be noted that, in order to connect conduits for feeding the fluids A and B to the micromixer 12, and in order to connect a conduit for ejecting an emulsified solution LM from the micromixer 12, threaded portions are provided to the bores 32, 34 and 50.

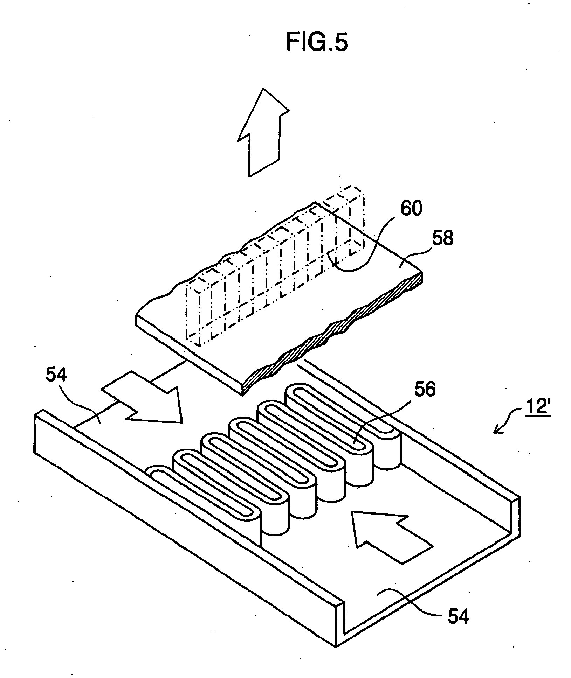

Fig. 5 is a partial perspective view showing the vicinity of a mixing part of a micromixer 12' according to another embodiment. As is shown in Fig. 5, in the micromixer 12', a channel member 56 is integrally placed to cross a channel 54 which is formed as a fine rectangle groove.

The channel member 56 is formed on a corrugated partition plate crossing and dividing the channel 54. The channel member 56 has a plurality of U-shaped microchannels.

A cover member 58 is fixed on the top surface of the channel 54 to form a fine rectangle cylinder as a whole.

In the cover member 58, a slit outlet 60 is perforated at a position where corresponds to the channel member 56. The outlet 60 is connected with a delivery opening (not shown) of a treated solution so as to deliver a mixed treated solution.

In the micromixer 12' constituted as mentioned above, two fluids enter the U-shaped channels of the channel member 56 respectively from both sides of the channel 54 shown in Fig. 5. The entering two fluids substantially form thin layers. When the fluids entering the neighboring U-shaped channels flow to the slit outlet 60, an open interface is formed between the neighboring two fluids. The thickness of each thin layer of the two fluids becomes a size of micrometers in the direction of the normal to the contact interface. The two fluids move by diffusion to each other from the open interface between the fluids to react each other. As a result, the fluids can be mixed continuously. As an example of preferred specifications, 15 of the channel members 56 are formed with the channel 54 having a width of 40 $\mu$m and a depth of 300 $\mu$m.

An example of such a micromixer to be used is an IMM micro reactor slit type (LIGA techniques) micromixer (type: SSIMM).

As mentioned above, a micromixer is preferably used as a device which mixes and emulsifies the material solution in the emulsification step in view of easy temperature control and high mixing properties. However, the device is not limited thereto. Another device which mixes and emulsifies the material solution such as a stirring tank can be used as long as the material solution can be mixed and emulsified under heat (at about a solubilization temperature or a phase inversion temperature).

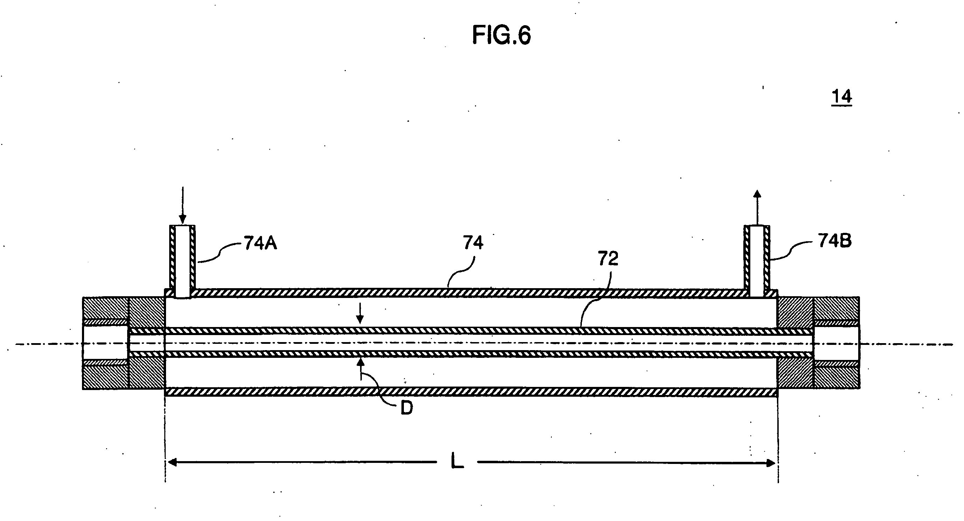

Fig. 6 is a sectional schematic view showing schematic configuration of a micro heat exchanger 14 used in the present invention. As shown in Fig. 6, the micro heat exchanger 14 comprises an inner tube 72 (a microchannel) with an equivalent diameter equal to or less than 1 mm and an outer tube 74 for passing a refrigerant. The outer tube 74 surrounds the inner tube 72.

The inner tube 72 preferably has an equivalent diameter equal to or less than 1 mm, and more preferably equal to or less than 500 $\mu$m. The length L of the inner tube 72 is determined so that the length is long enough to cool an emulsified material solution to a temperature at which the solution stabilizes.

A refrigerant inlet 74A to which a refrigerant flows and a refrigerant outlet 74B for ejecting the refrigerant passed through the outer tube 74 are connected to the outer tube 74. The temperature of the refrigerant entering the outer tube 74 is controlled with a control device or the like, thereby cooling a fluid in the inner tube 72 to a predetermined temperature. The temperature control of the micro heat exchanger 14 can be conducted by adjusting the temperature of the refrigerant with the temperature control part 20.

The temperature control system in the micro heat exchanger 14 is not limited to the above embodiment. The temperature may be controlled by placing the whole device into a temperature controlled vessel. Alternatively, it is also possible that a heater structure such as a metal resistance wire or polysilicon is prepared in a device and the heater structure is used for the heating while self-cooling is conducted for the cooling. As for sensing of temperature, in the case of using a metal resistance wire, another same metal resistance wire as in the heater is prepared and temperature is detected based on change of a value of resistance of the resistance wire. In the case of using polysilicon, temperature is detected by using a thermocouple. Alternatively, the heating and the cooling may be conducted from outside by contacting a Peltier device with the micro heat exchanger 14. The methods are selected depending on usages, a material of the body of a micro heat exchanger 14, or the like.

The micro heat exchanger is not restricted to the above embodiments. Another micro heat exchanger may be used as long as it has a microchannel with an equivalent diameter equal to or less than 1 mm and a function of controlling the temperature of a fluid passing through the microchannel. For example, an IMM micro heat exchanger (manufactured by ITEC Co., Ltd.), an external heating micro heat exchanger of Karlsruhe (EP1046867), or the like may also be preferably used.

The micromixer 12 and the micro heat exchanger 14 are preferably connected so that spacing between them is as small as possible. That is, the retention time from the outlet of the micromixer 12 to the inlet of the micro heat exchanger 14 is preferably designed to be equal to or less than 1 second, preferably equal to or less than 0.1 second, and more preferably equal to or less than 0.01 second.

In manufacturing micro devices such as a micromixer or a micro heat exchanger, in particular manufacturing of each component, semiconductor processing techniques, particularly an etching process such as photolithography etching, precision machinery processing techniques such as ultrafine electrical discharge machining, stereo lithography method, mirror finish processing techniques, or diffusion bonding techniques may be used. In addition, machining techniques using a general lathe or a drilling machine may be used. Those skilled in the art can manufacture the micro devices and components easily.

Materials used for micro devices are not particularly restricted. Materials which can be subjected to the processing techniques and are not influenced by fluids to be combined may be used. Examples of the materials may include: metallic materials such as iron, aluminum, stainless steel, titanium or various alloys; resin materials such as fluororesins or acrylic resins; and glass such as silicon or quartz.

The temperature control part 20 is a device for controlling the temperature of a thermostatic chamber 18 accommodating the body of the micromixer 12 or the micromixer 12. As for the micromixer 12, the micromixer 12 and a feed/ejection piping system (piping made of SUS) communicating with the micromixer 12 are placed in the thermostatic chamber 18. The temperature in the thermostatic chamber 18 is controlled by the temperature control part 20 to be at about a phase inversion temperature (equal to or less than $\pm 0.1$°C). It should be noted that a method of controlling temperature of the micromixer 12 is not restricted to the above embodiments. The body of the micromixer 12 may have a temperature control mechanism.

The temperature control part 21 is a device for controlling the temperature of a refrigerant to be supplied to the micro heat exchanger 14. The micro heat exchanger 14 is controlled to be equal to or less than a stabilization temperature by controlling the temperature of a refrigerant to be supplied to the micro heat exchanger 14 with the temperature control part 21.

As a device that sends liquid, a device having precise flow rate and less prone to cause pulsing motion is preferable. For example, a plunger pump, a syringe pump or the like may be preferably used. The range of flow rate varies depending on a mixing and emulsification device to be used. A preferred flow rate is equal to or greater than a flow rate that applies shearing stress required for emulsification in the range of a guaranteed flow rate and pressure.

Next, operations in manufacturing equipment 10 are described with reference to Fig. 3.

First, a solution A containing a nonionic surfactant and an oil agent, and a solution B mainly containing water are fed to a micromixer 12. The inside temperature of the micromixer 12 is heated to a phase inversion temperature by a thermostatic chamber 18. The solutions A and B are mixed via microchannels 44 and 46 to be emulsified. At this time, the solutions are emulsified at about a phase inversion temperature, thereby providing an emulsion that has a fine particle size and excellent monodispersity (an emulsification step).

Then a solution outflowing from the micromixer 12 enters a micro heat exchanger 14 in a period equal to or less than a second. The solution is subjected to heat exchange with a refrigerant to be controlled to have a temperature equal to or less than a stabilization temperature, whereby the solution is rapidly cooled to a temperature equal to or less than a stabilization temperature (an emulsion stabilization step).

In this way, because temperature distribution is small and temperature control is easily conducted in microchannels, an emulsion can be stabilized without proceeding of Ostwald ripening or coalescence of emulsion particles. Therefore, an emulsion that has a fine particle size and high monodispersity can be obtained.

According to the embodiments described above, an emulsion that has a fine particle size and high monodispersity can be obtained with less energy in comparison with an emulsification method by applying a general mechanical shearing stress.

Embodiments of a method of manufacturing an emulsion according to the present invention have been described so far. However, the present invention is not restricted to the above embodiments, and further various embodiments may be adopted.

For example, the present invention is also applicable to the case of forming a stable water-in-oil emulsion by rapidly heating an emulsion emulsified at about a phase inversion temperature. The present invention is also applicable to an emulsification step being conducted at a solubilization temperature.

The present invention is applicable to a method of manufacturing an emulsion that is widely used in industrial usages such as foods, make up materials, or pharmaceuticals.

Hereinafter, an example to which the method of manufacturing an emulsion according to the present invention is applicable is described. However, the present invention is not restricted thereto.

Experiments of manufacturing oil-in-water emulsions by the phase inversion temperature emulsification method by using two types of oil agents, pure water and a nonionic surfactant were conducted. Then comparison was conducted as to average particle sizes (Mv: based on volume) and particle size distributions (Mv/Mn) of oil droplets of emulsions obtained when an emulsification method and a cooling method after emulsification were changed.

The average particle sizes (Mv: based on volume) and particle size distributions (Mv/Mn) were measured with a flow particle image analyzer (SYSMEX CORPORATION: FPIA-2100). It should be noted that Mv/Mn (volume average particle size/number average particle size) is an indicator of monodispersity. The closer to 1 Mv/Mn is, the more excellent the monodispersity is.

[Table 1]

|  | | Composition | Content (mass%) |
|---|---|---|---|
| Solution A | | Cyclohexane | 37.2 |
|  | | Polyoxyethylene (10) nonylphenyl ether | 7.0 |
| Solution B | | Pure water | 55.8 |

(Device Configuration)

1. Emulsification Device

· Stirrer: magnetic stirrer
· Micromixer: a single mixer manufactured by IMM (material: Ag, channel width: 40 $\mu$m)

2. Cooling Device

· Thermostatic chamber with stirrer (kept at 25°C)
· Double tube A made of SUS
(outer diameter of external tube: 21.7 mm, inner diameter of external tube: 18.4 mm, outer diameter of internal tube: 10 mm, inner diameter of internal tube: 8 mm, length: 100 mm)
· Double tube B made of SUS
(outer diameter of external tube: 21.7 mm, inner diameter of external tube: 18.4 mm, outer diameter of internal tube: 1.58 mm, inner diameter of internal tube: 0.5 mm, length: 100 mm)
The double tubes A and B made of SUS were cooled by flowing cooling water at 5°C along with the tubes at a flow rate of 5.6 L/minute.

3. Others

· Syringe pump manufactured by HARVARD, syringe for 50 mL

(Temperature Control Method)

Emulsification step: conducted by immersing a micromixer or a beaker and a feed/ejection piping system (piping made of SUS) communicating therewith in a thermostatic chamber controlled to be at a predetermined temperature (equal to or less than ±0.1 °C)
Emulsion stabilization step: conducted by controlling the temperature of a refrigerant (cold water) fed to a micro heat exchanger

(Emulsification Conditions)

The solutions A and B were mixed in the thermostatic chamber kept at 63°C and then cooled to 25°C.
In Example 1, the solutions A and B heated to 63°C were fed to the micromixer at flow rates of 5 mL/minute and 5 mL/minute respectively to emulsify the solutions. After that, the emulsion was fed to the double tube B made of SUS at a flow rate of 10 mL/minute to cool the emulsion. The retention time in the double tube B was 0.1 seconds. It should be noted that cooling water at 5°C was flowed along with the double tube B made of SUS at a flow rate of 5.6 L/ minute.
Comparative Example 1 was conducted as with Example 1 except that the emulsion obtained by emulsifying the solutions A and B in a micromixer was cooled in the double tube A made of SUS.
Comparative Example 2 was conducted as with Example 1 except that the emulsion obtained by emulsifying the solutions A and B in a micromixer was cooled in a beaker in the thermostatic chamber set at 25°C with stirring the solutions.
In Comparative Example 3, the solution A was added by a syringe pump at a flow rate of 10 mL/minute for 4 minutes via an SUS tube with an inner diameter of 2 mm to 40 mL of the solution B heated to 63°C with being stirred with a stirrer (rotational frequency: 400 rpm), and the solutions were stirred for 30 minutes to conduct emulsification. After that, the emulsion was cooled in room temperature from 63°C to 25°C gradually.
As for Example 1 and Comparative Examples 1 to 3, average volume particle sizes (Mv) and particle size distributions were measured. The results are shown in Table 2.

[Table 2]

|  | Example 1 | Comparative Example 1 | Comparative Example 2 | Comparative Example 3 |
|---|---|---|---|---|
| Emulsification method | Micromixer | Micromixer | Micromixer | Stirrer |
| Emulsification temperature | 63°C | 63°C | 63°C | 63°C |
| Cooling method | Double tube B made of SUS | Double tube A made of SUS | Stirring in beaker in thermostatic chamber | Stirring in beaker in thermostatic chamber |
| Cooling temperature | 25°C | 25°C | 25°C | 25°C |
| Average volume particle size immediately after preparation | Mv=3.3 $\mu$m Mv/Mn=1.3 | Mv=7.3 $\mu$m Mv/Mn=1.6 | Mv= 8.5 $\mu$m Mv/Mn=1.7 | Mv=12.1 $\mu$m Mv/Mn=3.0 |

As shown in Table 2, Example 1 in which the emulsion was cooled in a microchannel (Double tube B made of SUS) provided an emulsion that had a small average volume particle size and high monodispersity. On the other hand, Comparative Examples 1 to 3 provided an emulsion that had a larger average volume particle size and lower monodispersity than those of Example 1.

In particular, Comparative Example 1 in which the emulsion was cooled in a millichannel (Double tube A made of SUS) having temperature distribution provided an emulsion that had a larger average volume particle size and lower monodispersity than those of Example 1. Comparing Comparative Examples 2 and 3, conducting the emulsification step with a micromixer provided a smaller average volume particle size and higher monodispersity than with a standard stirring mixer.

In summary, by conducting a step of cooling an emulsion in a microchannel, an emulsion that has a fine particle size and high monodispersity can be obtained. Furthermore, it has been established that use of a micromixer for the emulsification step of preparing an emulsion can decrease average volume particle sizes and can increase monodispersity.

**Claims**

1. A method of manufacturing an emulsion by using a nonionic surfactant, an oil agent and water, wherein the following steps are conducted in a continuous flow system:

    an emulsification step of forming an emulsion by emulsifying the nonionic surfactant, the oil agent and the water at a phase inversion temperature at which three phases of the nonionic surfactant, the oil agent and the water coexist; and
    an emulsion stabilization step of passing the emulsion in a microchannel(72) with an equivalent diameter equal to or less than 1 mm to rapidly cool or rapidly heat the emulsion from the phase inversion temperature to a temperature at which the emulsion is stabilized.

2. A method of manufacturing an emulsion by using a nonionic surfactant, an oil agent and water, wherein the following steps are conducted in a continuous flow system:

    an emulsification step of forming an emulsion by emulsifying the nonionic surfactant, the oil agent and the water at a solubilization temperature at which the nonionic surfactant, the oil agent and the water are solubilized to form a single phase, the solubilization temperature being not less than a solubilization limiting temperature and not greater than a clouding point; and
    an emulsion stabilization step of passing the emulsion in a microchannel(72) with an equivalent diameter equal to or less than 1 mm to rapidly cool or rapidly heat the emulsion from the solubilization temperature to a temperature at which the emulsion is stabilized.

3. The method of manufacturing an emulsion according to claim 1 or 2, wherein a temperature difference in a radial direction of the microchannel(72) between a radial central portion and an inside wall surface of the microchannel (72) is equal to or less than 1 °C.

4. The method of manufacturing an emulsion according to any one of claims 1 to 3, wherein a temperature of the emulsion is changed at a rate equal to or greater than 100°C/second in the emulsion stabilization step.

5. The method of manufacturing an emulsion according to any one of claims 1 to 4, wherein retention time of the emulsion after the emulsification step is complete to provide the emulsion and before the emulsion is subjected to the emulsion stabilization step is equal to or less than 1 second.

6. The method of manufacturing an emulsion according to any one of claims 1 to 5, wherein the emulsification step is conducted by mixing the nonionic surfactant, the oil agent and the water in a mixing channel(44,46,48) with an equivalent diameter equal to or less than 1 mm.


**Patentansprüche**

1. Verfahren zur Herstellung einer Emulsion unter Verwendung eines nicht-ionischen Tensids, eines Ölmittels und Wasser, wobei die folgenden Schritte in einem kontinuierlichen Flusssystem durchgeführt werden:

   ein Emulgationsschritt zur Bildung einer Emulsion durch Emulgieren des nicht-ionischen Tensids, des Ölmittels und des Wassers bei einer Phasenumkehrtemperatur, bei der 3 Phasen des nicht-ionischen Tensids, des Ölmittels und des Wassers koexistieren; und
   ein Emulsionsstabilisierungsschritt des Leitens der Emulsion in einen Mikrokanal (72) mit einem äquivalenten Durchmesser von 1 mm oder weniger, um die Emulsion von der Phasenumkehrtemperatur schnell auf eine Temperatur zu kühlen oder zu erhitzen, bei der die Emulsion stabilisiert wird.

2. Verfahren zur Herstellung einer Emulsion unter Verwendung eines nicht-ionischen Tensids, eines Ölmittels und Wasser, wobei die folgenden Schritt in einem kontinuierlichen Flusssystem durchgeführt werden:

   ein Emulgationsschritt zur Bildung einer Emulsion durch Emulgieren des nicht-ionischen Tensids, des Ölmittels und des Wassers bei einer Solubilisierungstemperatur, bei der das nicht-ionischen Tensid, das Ölmittel und das Wasser so solubilisiert sind, dass sie eine einzige Phase bilden, die Solubilisierungstemperatur nicht geringer ist als eine Solubilisierungslimittemperatur und nicht größer als ein Ausflockungspunkt; und
   ein Emulsionsstabilisierungsschritt des Leitens der Emulsion in einen Mikrokanal (72) mit einem äquivalenten Durchmesser von 1 mm oder weniger, um die Emulsion von der Solubilisierungstemperatur schnell auf eine Temperatur zu kühlen oder zu erhitzen, bei der die Emulsion stabilisiert wird.

3. Verfahren zur Herstellung einer Emulsion gemäß Anspruch 1 oder 2, bei der eine Temperaturdifferenz in Radialrichtung des Mikrokanals (72) zwischen einem Radialmittelteil und einer inneren Oberflächenwandung des Mikrokanals (72) 1°C oder weniger ist.

4. Verfahren zur Herstellung einer Emulsion gemäß mindestens einem der Ansprüche 1 bis 3, wobei eine Emulsionstemperatur bei dem Emulsionsstabilisierungsschritt mit einer Geschwindigkeit von 100°C/sec oder größer verändert wird.

5. Verfahren zur Herstellung einer Emulsion gemäß mindestens einem der Ansprüche 1 bis 4, wobei die Rückhaltezeit der Emulsion nach dem Vollenden des Emulgationsschritts zur Bereitstellung der Emulsion und vor dem Unterwerfen der Emulsion dem Emulsionsstabilisierungsschritt 1 Sekunde oder geringer ist.

6. Verfahren zur Herstellung einer Emulsion gemäß mindestens einem der Ansprüche 1 bis 5, wobei der Emulgationsschritt durch Mischen des nicht-ionischen Tensids, des Ölmittels und des Wassers in einem Mischungskanal (44, 46, 48) mit einem äquivalenten Durchmesser von 1 mm oder weniger durchgeführt wird.

**Revendications**

1. Procédé de production d'une émulsion au moyen d'un tensioactif non ionique, d'un agent huileux et d'eau, où les étapes suivantes sont conduites dans un système à écoulement continu :

   une étape d'émulsification de formation d'une émulsion par émulsification du tensioactif non ionique, de l'agent huileux et de l'eau à une température d'inversion de phase à laquelle trois phases du tensioactif non ionique, de l'agent huileux et de l'eau coexistent ; et

   une étape de stabilisation de l'émulsion de passage de l'émulsion dans un microcanal (72) ayant un diamètre équivalent égal ou inférieur à 1 mm pour refroidir rapidement ou chauffer rapidement l'émulsion de la température d'inversion de phase à une température à laquelle l'émulsion est stabilisée.

2. Procédé de production d'une émulsion au moyen d'un tensioactif non ionique, d'un agent huileux et d'eau, où les étapes suivantes sont conduites dans un système à écoulement continu :

   une étape d'émulsification de formation d'une émulsion par émulsification du tensioactif non ionique, de l'agent huileux et de l'eau à une température de solubilisation à laquelle le tensioactif non ionique, l'agent huileux et l'eau sont solubilisés pour former une seule phase, la température de solubilisation n'étant pas inférieure à une température limitant la solubilisation et pas supérieure à un point de trouble ; et

   une étape de stabilisation de l'émulsion de passage de l'émulsion dans un microcanal (72) ayant un diamètre équivalent égal ou inférieur à 1 mm pour refroidir rapidement ou chauffer rapidement l'émulsion de la température de solubilisation et une température à laquelle l'émulsion est stabilisée.

3. Procédé de production d'une émulsion selon la revendication 1 ou 2, où une différence de température dans une direction radiale du microcanal (72) entre une partie centrale radiale et une surface de paroi interne du microcanal (72) est égale ou inférieure à 1°C.

4. Procédé de production d'une émulsion selon l'une quelconque des revendications 1 à 3, où une température de l'émulsion est modifiée à une vitesse égale ou supérieure à 100°C/s dans l'étape de stabilisation de l'émulsion.

5. Procédé de production d'une émulsion selon l'une quelconque des revendications 1 à 4, où le temps de rétention de l'émulsion après l'achèvement de l'étape d'émulsification pour produire l'émulsion et avant que l'émulsion soit soumise à l'étape de stabilisation de l'émulsion est égal ou inférieur à 1 seconde.

6. Procédé de production d'une émulsion selon l'une quelconque des revendications 1 à 5, où l'étape d'émulsification est conduite par mélange du tensioactif non ionique, de l'agent huileux et de l'eau dans un canal mélangeur (44, 46, 48) ayant un diamètre équivalent égal ou inférieur à 1 mm.

# FIG.1

$C_{16}E_8$ 9.09wt%

Squalane

Liquid paraffin

Hexadecane

Decane

Temperature(°C)

80

70

60

50

40

$\mathrm{II}_{O/W}$

● Clouding point
○ Solubilization limiting temperature

0        0.1      0.2      0.3      0.4      0.5      0.6      0.7

Water

Oil

Weight fraction of $C_{16}E_{34}$

## FIG.2

$isoR_9C_6H_4O(CH_2CH_2)_{9.7}H$ 7wt%/system

EP 1 905 505 B1

# FIG.3

EP 1 905 505 B1

FIG.4

FIG.5

# FIG.6

EP 1 905 505 B1

EP 1 905 505 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2002538947 A
- WO 0054735 A1
- JP 2003321325 A
- JP 6061454 B
- JP 9308822 A
- EP 1046867 A

### Non-patent literature cited in the description

- **T. TOMOMASA ; M. KAWACHI ; H. NAKAJIMA.** *Oil Chemistry,* 1988, vol. 37, 1012
- Technology, Evaluation and It's Application of Functional Emulsion. CMC Publishing CO., LTD, 8
- **H. SAITO ; K. SHINODA.** *Oil Chemistry,* 1968, vol. 17, 133
- Development of Emulsification Technology & Emulsifying Agent. CMC Publishing CO., LTD, 130
- New Techniques for Highly Stabilizing Emulsion. TECHNICAL INFORMATION INSTITUTE CO., LTD, 25